# EUROPEAN PATENT SPECIFICATION

(11) **EP 1 603 267 B1**
(45) Date of publication and mention of the grant of the patent: **24.08.2011**
(21) Application number: 05019890.2
(22) Date of filing: 18.07.2000
(51) Int. Cl.: H04L 29/06, H04M 11/06, H04L 5/14

(54) **Modem on hold**
Modem im Wartestellung
Mise en garde de modem

(30) Priority: 27.07.1999 US 361842; 10.09.1999 US 394018; 10.09.1999 US 393616
(43) Date of publication of application: 07.12.2005
(62) Divisional of application: 00960151.9
(73) Proprietor: Silicon Laboratories, Inc., Austin, TX 78735 (US)
(72) Inventor: Webster, Andrew, Irvine CA 92620 (US); Olafsson, Sverrir, 101 Reykjavic (IS); Raasch, Charles, F., Lake Forest CA 92808 (US); Doshi, Nimesh, Anaheim CA 92808 (US); Beadle, Burk, Irvine CA 92614 (US); Borden, Craig, E., Placentia CA 92870 (US); Otten, Robert, T., Orange CA 92869 (US)
(74) Representative: Wagner, Karl H.

(56) References cited:
- US-A- 4 852 151
- US-A- 5 519 767
- US-A- 5 550 908

## Description

### CROSS REFERENCES TO RELATED APPLICATIONS

This application is a continuation-in-part of U.S. 19990 394,018 (filed September 10, 1999), which is itself a continuation-in-part of U.S. 199909/361,842 (filed July 27, 1999).

### BACKGROUND

### 1. Technical Field

The present invention relates to the field of modem to modem data communication; and, more specifically, it relates to a modem to modem communication and three-way calling and call waiting telephony services.

### 2. Description of Related Art

A conventional communication system typically establishes an Internet data session through a local and a remote ISP (Internet Service Provider) modem via a telephone switching network. Similarly, other modem to modem communication uses the telephone switching network as the communication link. Such modems often share a single telephone line with other local telephony devices, e.g., telephones, facsimile machines, answering machines, etc.

To handle multiple incoming calls, telephone switching networks offer three-way calling and call waiting services. Such services can be accessed through manual interaction of a person using a telephone. Telephone switching networks have also added caller identification (caller ID) services to support call waiting. Thus, the person using the telephone may view the caller ID before deciding to accept an incoming call during a ongoing telephone conversation.

To maintain a data session between modems, continuous modem must be maintained during the data session. If after a period of time the modem signaling is lost, modems will conclude that the data session has been terminated and will disconnect.

When a telephone call waiting tone (indicating the presence of caller ID) is detected during a local modem to remote modem data session, a decoding process involving both the local modem and a telephone switching network CO (Central Office) may be undertaken to retrieve the caller ID. During the caller ID decoding process, however, the remote modem usually disconnects. Thus, the remote modem must be redialed to reestablish and continue the data session.

If the local modem does not attempt to decode the caller ID, the call waiting signaling will, at a minimum, interfere with ongoing communication and may cause the modems to hang up or retrain. Thus, the telephone switching network provides a mechanism for turning on and off the call waiting service. Before beginning the modem to modem data session, the call waiting service is turned off for the duration of the session. However, doing so prevents a user from receiving any other incoming calls on a shared telephone line. As a result, users are forced to add dedicated telephone lines for each type of telephony device in their premises.

Further disadvantages of the related art will become apparent to one skilled in the art through comparison of the related art with the drawings and the remainder of the specification.

Further attention is drawn to the document US-A-5 550 908, which describes techniques for providing interoperability between a first modem and a calling identity delivery on call waiting (CIDCW) service. According to an example, a first modem is coupled to an alerting signal receiver and a communications re-establishment device. The alerting signal receiver receives an alerting signal generated in response to an incoming call from a third party line if the first modem is communicating with a second modem. The communications re-establishment device reestablishes communications between the first modem and the second modem after the alerting signal receiver receives an alerting signal. The first modem is equipped to receive the alerting signal and reestablish communications with the second modem independent of the specific capabilities of the second modem, so that these techniques can be utilized in conjunction with a second modem not constructed in accordance with the described example.

Attention is also drawn to the document US-A-5 519 767. Here a call-waiting feature is supported on voice-and-data modems by causing voice-and-data modems to go into voice-only mode upon receipt of the modem clear-down signal. A first voice-and-data modem engaged in an initial voice-and-data call with a second voice-and-data modem responds to receipt of a call-waiting signal by generating a replica of the call-waiting signal on the user's audio channel. The first modem responds to a user request to pick up the waiting call by sending the modem clear-down signal to the second voice-and-data modem, going into voice-only mode, and transmitting a waiting-call acceptance signal. The initial call that is placed on hold is thus a voice-only call. While in a voice-plus-data picked-up waiting call, the first modem responds to a user request to reinstate the initial call by again sending the modem clear-down signal, going into voice-only mode, and transmitting a call-resumption signal. The first modem is thus in voice-only-mode when it is reconnected to the initial, voice-only, call. The re-connected initial call may now be re-converted into a voice-plus-data call in the conventional manner.

Finally attention is drawn to document US-A-4 852 151, which describes that a modem is adapted to accommodate a call waiting feature so that a user can select to continue an ongoing call or accept an incoming call. The modem detects a call waiting signal and generates a call waiting message. Where a call waiting signal is preceded by a loss of carrier, the modem detects the loss of carrier and then detects the presence of energy in a call progress band indicating that a new call is waiting. The modem can be selectably programmed to process the call waiting signal or to provide a call waiting message to a communications software package that can process the call waiting signal. The modem, in conjunction with the communications of software package, responds to the call waiting signal by asking whether the user wants to answer the incoming call or continue with the ongoing communication. The modem generates a programmable default response if the user does not respond within a prescribed time.

### SUMMARY OF THE INVENTION

In accordance with the present invention, a routing method, as set forth in claim 1, and a communication network, as set forth in claim 2, is provided.

The communication system comprising a remote modem and a local modem communicatively coupled thereto. The local modem, which shares access to the telephone network, detects call waiting signaling and directs the remote modem to enter a hold mode then temporarily relinquishes access to the telephone network.

The local modem may also perform caller identification processing during this process. If so, the caller identification information may be used to determine whether to service incoming calls. Making such determination may involve providing a user interface, or may be performed automatically by a computer coupled to the local modem.

Although unnecessary, the remote modem may remain in the hold mode for no longer than a predetermined interval. Other variations are also possible. For example, the local modem may use a v.42 protocol to set up a secondary channel for signaling the remote modem regarding the hold mode. A table might be used that stores pre-selected caller identification information for comparison with caller identification information associated with incoming calls. Such comparison may be used to determine whether to service incoming calls.

The remote and local modem attempts to maintain the communication session set up between the device housing the remote modem and the device housing the local modem. The remote modem must maintain the appearance of a connection to the upper layer protocols even though the connection to the local modem has been temporarily removed. Similarly, the local modem must maintain the appearance of the connection to the networking protocols using the communication capabilities of the local modem. To carry this out, the remote modem may be communicate with upper protocol layers of the network connection with manufactured data while in the hold mode. The local modem similarly maintains the appearance of a network connection with the application requiring the data by manufacturing data and presenting it to the network stack while the two modems are on hold.

The telephony device is coupled to the local link and may access the link when it is relinquished by the local modem. Specifically, the local modem establishes a data session with the remote modem by dialing a telephone number associated with the remote modem. After detecting a need to relinquish the local link to the telephony device, the local modem directs the remote modem to maintain the data session and temporarily relinquishes the local link to the telephony device.

The local modem may reestablish the data session without redialing the associated telephone number. Further variations are also possible. For example, the local modem may identify the need to relinquish the local link to the telephony device by detecting: a) call waiting signaling, b) a user initiated request, or c) a request that is automatically generated by a computer coupled to the local modem. Three-way calling and call waiting services are used to support the telephony device.

Yet other aspects of the present invention will become apparent through reference to the remainder of the specification including the claims set forth herein.

### BRIEF DESCRIPTION OF DRAWINGS

Fig. 1 is a block diagram illustrating an exemplary modem to modem communication network supporting three-way calling, call waiting and caller ID in accordance with various aspects of the present invention.
Fig. 2 is an exemplary schematic diagram of an Internet based communication system built in accordance with the present invention utilizing the functionality described in Fig. 1.
Fig. 3 is an exemplary embodiment of the communication system of Fig. 2, illustrating DCE signaling of an ISP to make the ISP caller ID aware.
Fig. 4 is an alternate exemplary embodiment of the communication system of Fig. 3 that employs keep alive functionality to maintain continuous data session.
Fig. 5 is a schematic diagram of a computing device 411 coupled to a modem 421 having a memory look up table, according to the present invention, and permitting call classification and functional assignment prior to forwarding caller ID information to the computing device 411.

### DETAILED DESCRIPTION OF DRAWINGS

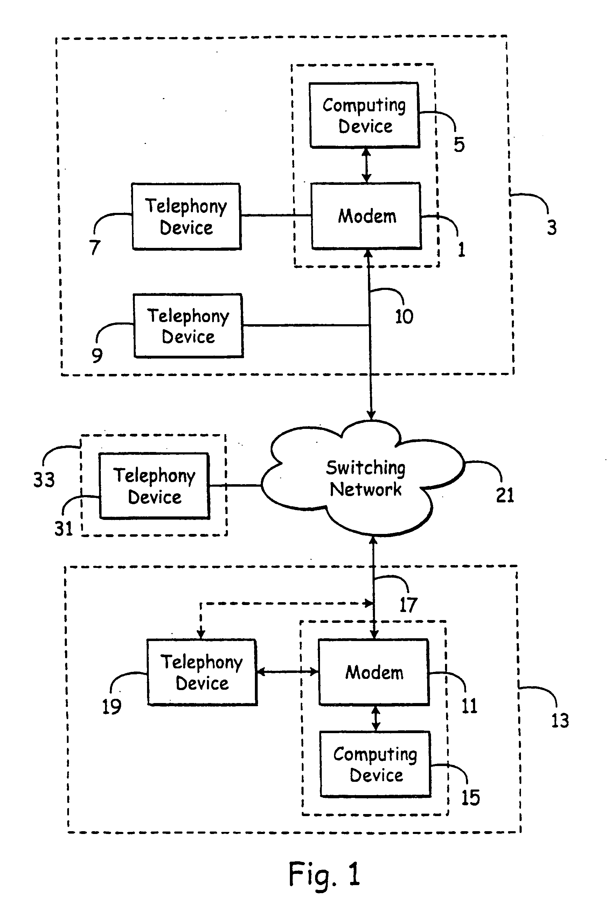

Fig. 1 is a block diagram illustrating an exemplary modem to modem communication network supporting three-way calling, call waiting and caller ID in accordance with various aspects of the present invention. In particular, a modem 1 at a premises 3 establishes and maintains ongoing communication with a modem 11 at a premises 13 via a switching network 21. If either the modem 1 or the modem 11 detect a need to temporarily relinquish a telephone line 10 or a telephone line 17, respectively, such modem (local modem) communicates to the other (remote modem) a request to hold for a predetermined period of time. If accepted, the remote modem places itself on hold, awaiting either: (a) reestablishment of communication from the local modem, or (b) a time out of the predetermined period of time. After placing the remote modem on hold, the local modem will relinquish or at least offer to relinquish the telephone line 10 or 17. Thereafter, when the telephone line 10 or 17 becomes available, the local modem will automatically reestablish communication with the remote modem. If the predetermined period of time has lapsed, the local modem will automatically call the remote modem. Otherwise, the local modem will reestablish communication by merely accessing the remote modem and engaging in a fast training sequence before carrying on where the modems 1 and 11 left off.

Either of the modems 1 and 11 can determine the need to relinquish their corresponding telephone lines 10 and 17 by (a) receiving call waiting signaling from the switching network 21, (b) detecting a local extension off hook, (c) receiving user input via computing devices 5 or 15, and (d) detecting a need from the associated computing device 5 or 15. When, for example, the modem 1 receives call waiting signaling from the switching network 21 (due to an incoming call from a telephony device 31 at a premises 33), the modem 1 communicates a request to hold to the modem 11.

If the modem 11 honors the request, the modem 11 begins waiting for reestablishment of the data session by the modem 1 for a first predetermined period (e.g., 30 seconds), and the modem 1 interacts with the switching network 21 to retrieve the caller ID information (if configured to do so) and presents an indication of the incoming call, along with caller ID information if employed, via a screen (not shown) on the computing device 5. The computing device 5 may signal a user by simulating a ring signal and delivering a pop-up window containing the caller ID information.

If the user fails to accept the incoming call or rejects such call, the modem 1 will reestablish communication with modem 11 before the first predetermined period lapses. If however the user wants to take the call, the user interacts to accept the call via the computing device 5. The modem 1 responds by communicating a second predetermined hold period (e.g., 30 minutes) to the modem 11 and then "flashes" the telephone line 10. The switching network 21 responds by connecting the incoming call to the telephone line 10. Thereafter, the user is free to use a telephony device 7 or 9, e.g., a telephone, facsimile machine, answering machine, etc., to service the incoming call. When the telephony device 7 or 9 hangs up, the modem 1 "flashes" the telephone line 10. The switching network 21 again communicatively couples the telephone lines 10 and 17, and the modem 1 reestablishes communication with the modem 11. Alternatively, if the telephony device 31 disconnects prior to the modem I "flashing," the switching network 21 again communicatively couples the telephone lines 10 and 17, and the modem 1 reestablishes communication with the modem 11. Had the first predetermined time period lapsed before the second predetermined period was communicated or had the second predetermined time period lapsed before the modem 1 reestablished communication, the modem 1 would automatically dial or redial the modem 11 to reestablish the link.

Instead of or in addition to signaling a user via the computing device 105, the modem 1 may also deliver a ring signal or other such indication directly to the attached telephony device 7 or to the locally connected telephone device 9 via the telephone line 10. The modem 11 performs similar functionality in its interaction with the computing device 15 and the telephony device 19 when receiving an incoming call via call waiting services.

The modem 11 may also detect the need to relinquish the telephone line 10 by detecting a local extension off hook event from either the telephony device 7 or 9. For example, when the telephony device 7 happens to comprise a telephone, the modem 1 detects when a user lifts the receiver of the telephony device 7 and, in response, communicates a hold request to the modem 1 and establishes a three-way call dial tone through interaction with the switching network 21. The user may then establish an outgoing call. When the telephony device 7 hangs up, the modem 1 using the three-way calling service features reestablishes the link via the switching network 21 to the modem 11 without having to redial.

A user may also interact via the computing device 5 to request gaining access to the telephone line 10. For example, the user may desire to send a fax from a telephony device 9. The modem 1 responds to such a request by establishing a hold condition with the modem 11 and using three-way calling functionality to gain a dial tone on the telephone line 10. Thereafter, the modem 1 communicates via the computing device to the user that the telephone line 10 is free for use by the telephony device 9. When the telephony device 9 disconnects or the remote side disconnects, the modem 1 again can reestablish the communication link with the modem 11 without having to redial.

Similar functionality also occurs automatically without user interaction. For example, a computing device 5 may periodically gain access to the telephony device 31 to service a communication exchange with the telephony device 31.

In addition, the modem 1 may place the modem 11 on hold to permit the telephony device 7 or 9 to communicate with the telephony device 19. In this way, the primary communication link between the modems 1 and 11 might be used to set up the secondary communication link between the telephony devices 7 or 9 and 19.

The switching network 21 may comprise one or more central offices (COs) interconnected by a toll network. The telephone lines 10 or 17 may comprise twisted pair, cable, fiber and/or wireless links, for example.

The modem 1 and the computing device 5 may be separate or integrated. Similarly, the modem 11 may be internal to the computing device 15 or external.

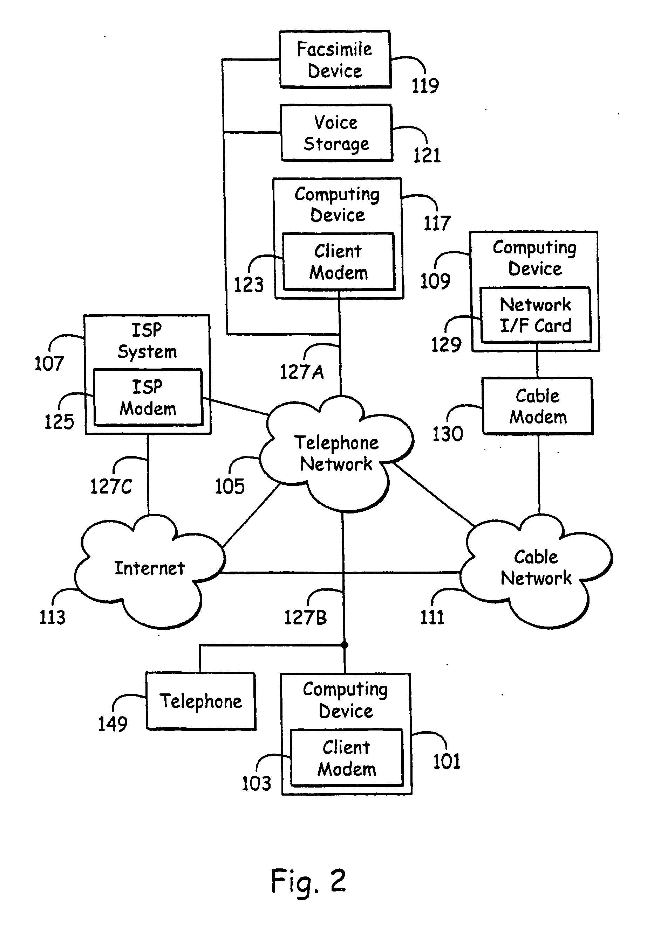

Fig. 2 is an exemplary schematic diagram of an Internet based communication system built in accordance with the present invention utilizing the functionality described in Fig. 1. More specifically, a client modem 103 that services a client computer101 establishes and maintains a data connection with an ISP (Internet Service Provider) modem 125 of an ISP computing system 107.

A user wishing to establish the data session between the client computer 101 and the Internet 113, employs client modem 103 that dials through a telephone network 105 to an ISP modem 125. The ISP modem 125 provides access to the ISP 107 that participates via a link 127C on the Internet 113.

During the existence of the data communication link, the telephone network 105 may receive a telephone call from, for example, a telephone 119. In response, the telephone network 105 delivers call waiting signals to the client modem 103. On detecting a call waiting tone, the client modem 103 signals the ISP modem 125 regarding the presence of caller identification. In one embodiment, the client modem instructs the ISP modem 125 to maintain the communication link for a first predetermined period of time. In another, the ISP modem 125 either will wait indefinitely or will have a preset predetermined period which need not be communicated. The client modem 103 next coordinates with the telephone network 105 to receive and decode the caller identification. The caller identification is forwarded to the user via a display on the client modem 103 (if external), and/or on the client computer 101. In turn, based on the caller identification, the user determines whether to terminate the existing data session or ignore the incoming telephone call and return to the existing data session, all within the first predetermined period. If the user fails to act or chooses to reject the incoming call, the client modem 103 will reestablish communication with the ISP modem 125. If the user chooses to accept the call, and if the first predetermined period is not long enough, the client modem 103 will communicate a second predetermined period, e.g., 30 minutes, to the ISP modem 125. Thereafter, the client modem 103 "flashes" the telephone network and signals the user via the client computer 101 as previously discussed and/or, if so configured. via the line 127. The telephone network 105 responds by connecting the incoming call to a line 127. The user may then employ a facsimile device 119 or a voice mail or voice storage system 121, for example, to service the incoming call.

The ISP modem 125 may also be placed on hold by the client computer 101, either through manual user interaction or automatically to meet a need that arises. For example, a user may desire to use the telephone 149 during an ongoing session between the ISP modem 125 and the client modem 203. The user interacts via a window on the computing device 101 to place such request. In response, the computing device 101 directs the client modem 103 to place the session on hold.

As before, the client modem 103 communicates a hold request to the ISP modem 125 which may choose to honor the request. If refused, the connection is terminated. If honored, the ISP modem 125 is placed on hold, and the telephone network 105 is signaled to begin three-way calling services. The telephone network 105 provides a dial tone and the client modem 103 directs the computing device 101 to display a ready indication. Thereafter, the user may employ the telephone 149 to place the call.

All other modes of employing three-way calling and call waiting services described in reference to Fig. 1 are also possible. In all cases, the ISP modem 125 and the client modem 123 both communicate with upper layers of the protocol stack to ensure that the session is maintained. Thus, even though the session is actually placed on hold, neither the application software nor the higher protocol stack layers need to be aware of such condition, even though they might be modified to do so.

A point to point data session may exist between the client computer101 and a computer 117. The data session is established after a modem handshake following a dial up routine between the client modem 103 and a modem 123. Caller ID information/call waiting and three-way calling functionality are similarly processed as referenced above.

Additional features of the client modem 103 permits the direction of both faxes received from a fax modem 121 and voice mail received from a voice storage 119. A client computer 109 is connected to the Internet 113 via a cable network 111. A cable modem 130A enables the connection of the client computer 109 and the Internet 113 connectivity and further constitutes part of a communication network 100.

Communication links 127A and 127B couple the client modems 103 and 123 with the telephone network 105. The communication links 127A and 127B comprise twisted pair wiring but may also or alternatively comprise a radio communication link, for example, or may be ISDN, ADSL, or DSL, for example.

Cable modems may be employed which utilize similar functionality. Specifically, a cable modem 130 couples with a computing device 109 via a network interface card 129. A computing device 101 may directly couple with the cable modem 130 via the telephone network 105 and the cable network 111. If a need arises to relinquish the line 127B, e.g., an incoming call is detected by the computing device 101. The computing device 101 sends a hold request to the cable modem 130 which, in turn, "spots" the upper layers of its protocol stack to act like the session is ongoing and begins waiting. As before, the client modem 103 relinquishes the link 127B to servicing the need and, when completed, the client modem 103 reestablishes the session with the cable modem 130 without having to redial.

In a further example, a CO within the telephone network 105 provides an "attention signal" to both the client modem 103 and the ISP modem 125 when, for example, the client modem 103 and the ISP modem 125 are engaged in ongoing communication. The "attention signal" would convey a pending request to at least temporarily change the "ownership" of the telephone line 127B. In such an embodiment, the client modem 103 need not inform the ISP modem 125 that it is considering relinquishing the telephone line 127B.

The CO within the telephone network has been modified to deliver a dial tone while not dropping the second line. Thus, when the client modem 103 detects an extension-off hook condition, e.g., which the telephone 149 is picked up, the client modem 101 first signals the ISP modem 125 to go into a hold mode. Next, the client modem 103 requests that the CO generate a dial tone and relinquishes the line to the telephone 149.

In such examples as well as the other described herein, call waiting indications, with or without caller ID services are "attention signals." Attention signals are those signals that convey to a modem that a request for another use for a shared telephone line is present. Another example beyond call waiting might be an operator's manual attempts to interrupt an ongoing session in emergency situations. In most embodiments, attention signals are delivered only to the modem whose line is to be shared, yet, as described above, need not be the case. Such attention signals can also be delivered to all parties and modems or telephony devices participating in an ongoing communication exchange.

Additionally, the ISP modem 125 might send a hold request to the client modem 103. While the client modem 103 is on hold, the ISP 107 can change the routing of the ISP modem 125, substitute another ISP modem automatically (for example when ISP modem 125 is having problems or is not optional for the client modem 103), etc. This mall all happen without ever relinquishing any telephone link.

The aforementioned functionality also supports Internet browser interoperability. For example, when interacting with a browser running on the computing device 101 to surf the Internet, a user may encounter a telephone number on a web page that they would like to call. By selecting a "place call" button on the browser, the computing device 101 delivers an "attention signal" to the client modem 103 which, in turn, places itself and the ISP modem 125 in a hold mode. Before entering the hold mode, the client modem 103 may also dial the number and if so configured and pursuant to meta information provided in the web page, may interact with the answering party or system to assist the user in reaching a desired location within the receiving party's answering system. Whether or not such additional services are provided by the client modem 103, the computing device 101 then delivers a signal to the user to pick up the telephone 149.

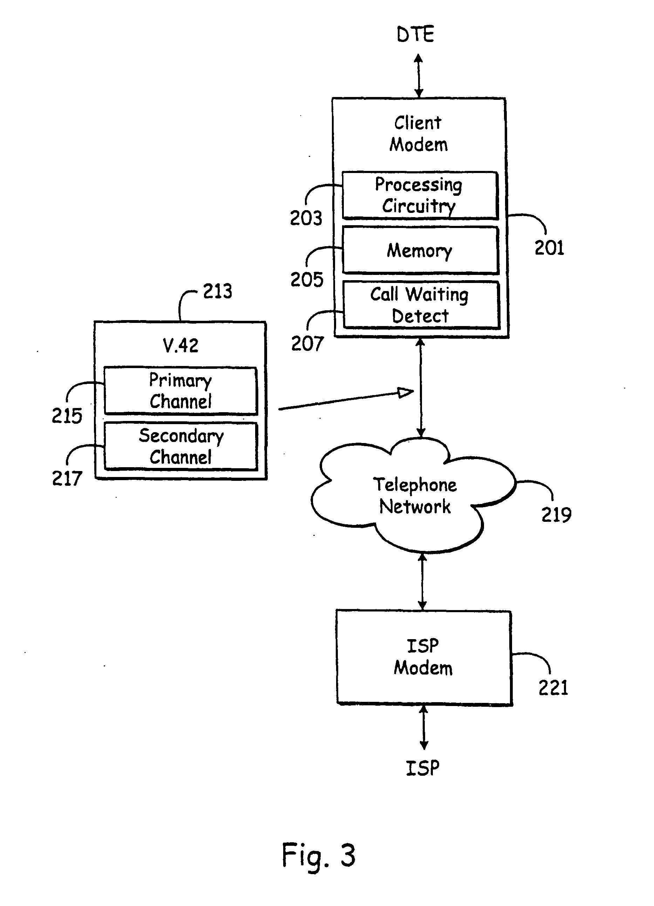

Fig. 3 is an example of the communication system of Fig. 2, illustrating DCE signaling of an ISP to make the ISP caller ID aware. More specifically, using a secondary channel 217, a client modem 201 signals an ISP modem 221 to make the ISP modem 221 aware when a call waiting signaling is received.

A user utilizing the client modem 201 engages in a data session on a primary channel 215 with an ISP modem 221 via a telephone network 219. When a call waiting tone is detected during the data session, call waiting detect circuitry 207 informs a processing circuitry 203 that an incoming telephone call has been detected. In response, the processing circuit 203 signals the ISP modem 221 informing of the call waiting event. The processing circuitry 203 then utilizes a secondary channel 217 to signal the ISP modem 221 to refrain from disconnecting while the ISP modem 221 decodes the received caller identification information. In response, the ISP modem 221 may choose to accept by transmitting an acknowledgment signal.

After receiving the acknowledgement, the processing circuitry 203 performs caller ID processing to retrieve the caller ID information from the telephone network 219. Specifically, the processing circuitry 201 transmits a DTMF tone to a central office (CO) within the telephone network directing that the caller ID information be forwarded. The CO then transmits a Bell 211 signal having the caller ID information (while muting the data session line connected to the ISP modem 221). The processing circuit switches from its current protocol, typically V.90 to the Bell 212 mode and receives the caller ID information. The caller ID information is presented to the user through a LCD display within the client modem 201 or through a pop-up window generated by the user's software, for example, and requesting whether the user wishes to accept or reject the incoming call.

In one example, if the user accepts the incoming call, the ISP modem 221 retains the data session connection for a predetermined time while the client modem 201 is engaged with the incoming call. On returning, the client modem 201 resynchronization with the ISP modem 221 to continue the prior data session, that is, the client modem 201 and the ISP modem 221 go through timing synchronization, train echo cancellers and transmit known signal conditions, for example. If after the expiration of the predetermined interval, the client modem 201 fails to return, the data connection is terminated.

In an alternate example, the user may accept the incoming call while the ISP modem 221 is instructed to idle. When the client modem 201 returns, a fast resynchronization algorithm is used to re-establish communication more rapid because prior line conditions are known, and both modems need not go through full retraining.

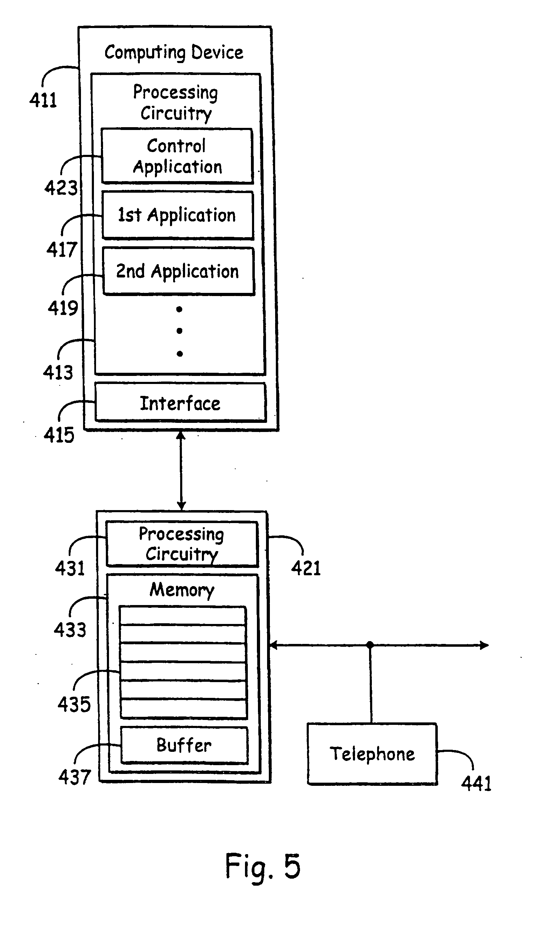

Another functionality previously described with reference to Figs. 1-2 also apply for interactions between the client modem 201 and the ISP modem 221. In addition, the client modem 201 may employ a look up table as further referenced in Fig. 5 to determine how and whether to service an incoming call.

The secondary channel 217 is a virtual channel set up using the V.42 protocol. This is a proprietary mode in which both the client modem 201 and the ISP modem 221 communicate their capabilities and exchange information through the secondary channel 217. The processing circuitry 203 employs software, hardware and firmware to direct and synchronize various tasks relating to the client modem 201. Although described in reference to ISP communication, such functionality also applies outside of that context.

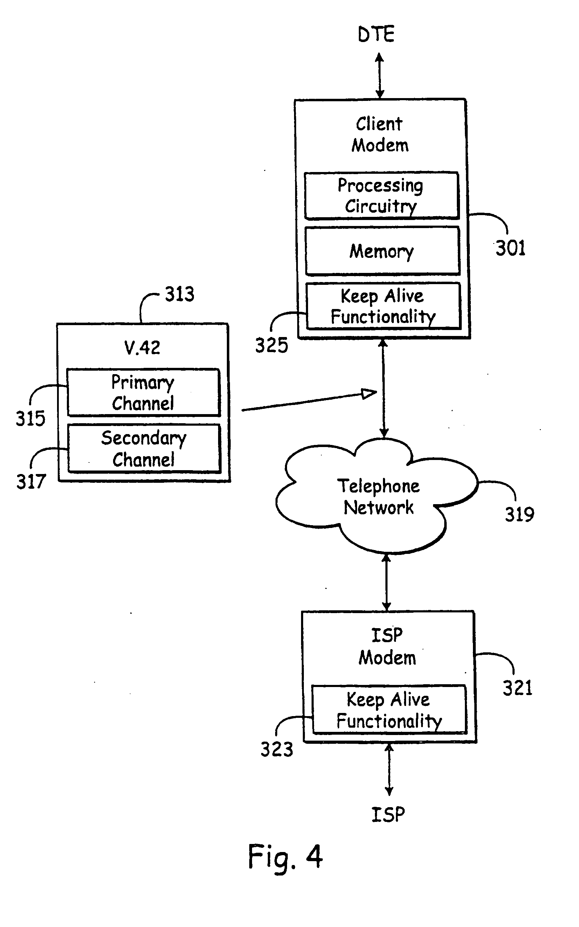

Fig. 4 is an alternate example of the communication system of Fig. 3 that employs keep alive functionality to maintain continuous data session. Specifically, the ISP modem 321 employs a keep alive function 323 which delivers "keep alive packets" to higher protocol whether or not the client modem 301 sends a hold request.

Particularly, there are several layers of protocol involved in the connection between a user's Internet browser, for example and an ISP, and these layers have to be "kept alive" while the client modem 301 relinquishes a link 331 for call waiting services or otherwise. During a data session, while the client modem 301 has relinquished the link 331, the higher protocol layer, for example, TCP/IP, may encounter a time out condition and terminate the data session.

To achieve a continuous data session, when caller ID is received, the bottom two layers namely, the physical and the data link layer, responsible for transmission, framing, and error control of the communications link may be modified. In one embodiment, the keep alive functionality 323 within the ISP modem 321 transmits "keep alive" packet streams to the higher TCP/IP protocol layer after the modem signal is interrupted. This deceives the higher TCP/IP layers and prevents the session from terminating. The "keep alive" packet stream may be either data bits or control signals or both, and located within the client modem 301, the ISP modem 321 or both.

Again, the keep alive stream need not require a hold request to be used. In fact, in one embodiment, the ISP modem uses the keep alive whenever it is having difficulty reaching the client modem 301 for whatever reason. The stream is used for a predetermined period to allow reestablishment of the link during a period that far needs a traditional session termination period.

Fig. 5 is a schematic diagram of a computing device 411 coupled to a modem 421 having a memory look up table, according to the present invention, and permitting call classification and functional assignment prior to forwarding caller ID information to the computing device 411. The computing device 411 comprises a processing circuit 413 and other conventional circuitry such as an interface circuit 415.

The processing circuit 413 operates pursuant to a plurality of applications (e.g.. a first and second application 417 and 419) that independently service incoming calls via the modem 421. A control application 423 selectively interacts to launch the plurality of applications.

The modem 421 comprises a processing circuit 431 and a memory 433, among other circuitry. The modem 421 determines whether to forward the caller ID information to the computing device 411 based on a table 435 within the memory 433. The table 435 stores a series of caller ID cross reference entries. Thus, for example, upon detecting an incoming call, the modem 421 notifies an ISP modem (not shown) that it is about to interrupt the present modem connection to receive caller ID information. When the caller ID information is received, the processing circuit 431 stores the caller ID information in a buffer 437 and compares that information with the entries in the table 435.

If a match is found, the processing circuit 431 informs the ISP modem that delivers the buffered caller ID information to the computing device 411 to the control application 423 which, in turn, launches the appropriate application that has been designated to service the received caller ID information. The caller ID information may also be forwarded to such application.

If no match is found, the modem 421 will ignore the incoming call and continue the data session with the ISP modem. Thus, the modem 421 need not involve the computing device 411 or bother the user by forwarding caller ID information unless it has been assigned to do so via the entries in the table 435. In this embodiment, the table is used to forward only those incoming calls that have a table entry. However, in alternate embodiments the table may be used to screen out matching incoming calls.

The user via computing device 411 loads the table 435 with, for example, telephone numbers of incoming calls to be processed by the first and second applications 417 and 419. In an example the first application 417 comprises facsimile processing software, while the second application 419 comprises data processing software. If facsimile transmissions are only to be received from a single telephone number, that telephone number is loaded into the table 435 of the modem 421, similarly, the telephone numbers from which data transmissions will be received are also loaded into the memory 435. When a facsimile transmission is received from the telephone number stored in the table 435, the processing circuitry 431 delivers the caller ID information to the computing device 411, and immediately switches to the facsimile transmission without user interference.

Thereafter, the control application 423 directs the first application 417 in handling the transmission. When the facsimile transmission is completed, the control application 423 cooperates with the modem 421 to return the user to the prior data session. When an incoming data transmission is received from a corresponding telephone number stored in the table 435, the processing circuit 431 delivers the caller identification to the computing device 411 for processing by the second application 419, for example. Calls from telephone numbers that are not contained in the table 435 may be ignored by the modem 421.

Alternatively, or in addition, the table may be loaded with caller ID information that identifies telephone numbers to be ignored and not answered by the DCE/DTE. For example, known voice telephone numbers may be ignored by the DCE 421 while all other non-tabled numbers would be answered by the DCE 421.

Thus, by screening and/or the selection of specific calls, the DCE is able to save time expended by the user in determining which telephone calls to accept. In addition, a single telephone line may be shared by a plurality of communication devices, such as the DCE 421 and other DCEs or telephones. Further, such screening and/or filtering may also be employed to remove unnecessary call processing burdens from an active DTE which may be engaged in other tasks. Thus, for example, the computing device 411 during a data session need not have to share processing resources to service calls not intended for the computing device 411.

Although the table 435 is shown to be stored within the modem 421, it might be alternatively be stored within the computing device 411. In such embodiments (not shown), the computing device 411 still automatically filters unwanted incoming calls.

## Claims

1. A routing method for use by a communication network wherein the communication network is a cable network, telephone network or internet network while a first modem (1) is in communication with a second modem (11) over a communication line (10, 17) said routing method comprising:
transmitting a network request to said first modem (1) to request said first modem (1) to initiate a modem on hold process for placing said communication over said communication line (10, 17) with said second modem (11) on hold, wherein said transmitting said network request to said first modem (1) is in response to detecting a problem with said first modem (1);
receiving an acknowledgement from said first modem (1) that said communication between said first modem (1) and said second modem (11) over said communication line (10, 17) has been placed on hold for a period of time; and
substituting a third modem for said first modem (1) in response to said receiving said acknowledgement, wherein said second modem (11) starts communicating with said third modem over said communication line (10, 17) after said period of time elapses,
wherein at least one of said first, second and third modems (1, 11) is Internet Service Providen modem.

2. A communication network for routing a communication line (10, 17) while a first modem is in communication with a second modem (11) over said communication line, wherein the communication network is a cable network, telephone network or internet network and said communication network comprising:
a transmitter configured to transmit a network request to said first modem (1) to request said first modem (1) to initiate a modem on hold process for placing said communication over said communication line (10, 17) with said second modem (11) on hold, wherein said transmitter transmits said network request to said first modem (1) in response to detection of a problem with said first modem (1);
a receiver configured to receive an acknowledgement from said first modem (1) that said communication between said first modem (1) and said second modem (11) over said communication line has been placed on hold for a period of time; and
wherein said communication substitutes a third modem for said first modem (1) in response to said acknowledgement, and wherein said second modem (11) starts communicating with said third modem over said communication line (10, 17) after said period of time elapses, wherein at least one of said first, second and third modems (1, 11) is a Internet Service Provider modem.

## Patentansprüche

1. Ein Routingverfahren zur Verwendung durch ein Kommunikationsnetzwerk, wobei das Kommunikationsnetzwerk ein Kabelnetzwerk, ein Telefonnetzwerk oder ein Internet Netzwerk ist, während ein erstes Modem (1) in Kommunikation mit einem zweiten Modem (11) über eine Kommunikationsleitung (10, 17) ist, wobei das Routingverfahren Folgendes aufweist: Senden einer Netzwerkanfrage an das erste Modem (1) um bei dem ersten Modem (1) anzufragen einen Modem-in-Halteprozess zu initiieren, um die Kommunikation über die Kommunikationsleitung (10, 17) mit dem zweiten Modem (11) auf Halten zu setzen, wobei das Senden der Netzwerkanfrage zu dem ersten Modem (1) ansprechend ist auf das Detektieren eines Problems mit dem ersten Modem (1); Empfangen einer Bestätigung von dem ersten Modem (1), dass die Kommunikation zwischen dem ersten Modem (1) und dem zweiten Modem (11) über die Kommunikationsleitung (10, 17) für eine Zeitspanne auf Halten gesetzt wurde; und Ersetzen des ersten Modems (1) durch ein drittes Modem ansprechend auf das Empfangen der Bestätigung, wobei das zweite Modem (11) eine Kommunikation mit dem dritten Modem über die Kommunikationsleitung (10, 17) beginnt, nachdem die Zeitspanne abgelaufen ist, wobei wenigstens eines des ersten, zweiten oder dritten Modems (1, 11) ein Internet-Service-Provider Modem ist.

2. Ein Kommunikationsnetzwerk zum Routen einer Kommunikationsleitung (10, 17), während ein erstes Modem (1) in Kommunikation mit einem zweiten Modem (11) über die Kommunikationsleitung (10, 17) ist, wobei das Kommunikationsnetzwerk ein Kabelnetzwerk, ein Telefonnetzwerk oder ein Internet Netzwerk ist, und wobei das Kommunikationsnetzwerk Folgendes aufweist:
einen Sender, der konfiguriert ist, um eine Netzwerkanfrage an das erste Modem (1) zu senden, um bei dem ersten Modem (1) anzufragen einen Modem-in-Halteprozess zu initiieren, um die Kommunikation über die Kommunikationsleitung (10, 17) mit dem zweiten Modem (11) auf Halten zu setzen, wobei der Sender die Netzwerkanfrage zu dem ersten Modem (1) sendet, ansprechend auf das Detektieren eines Problems mit dem ersten Modem (1);
einen Empfänger, der konfiguriert ist, um eine Bestätigung von dem ersten Modem (1) zu empfangen, dass die Kommunikation zwischen dem ersten Modem (1) und dem zweiten Modem (11) über die Kommunikationsleitung für eine Zeitspanne auf Halten gesetzt wurde; und
wobei die Kommunikation das erste Modem (1) durch ein drittes Modem ersetzt ansprechend auf die Bestätigung, und wobei das zweite Modem (11) eine Kommunikation mit dem dritten Modem über die Kommunikationsleitung (10, 17) beginnt, nachdem die Zeitspanne abgelaufen ist, wobei wenigstens eines des ersten, zweiten oder dritten Modems (1, 11) ein Internet-Service-Provider Modem ist.

## Revendications

1. Procédé de routage pour utilisation par un réseau de communication, dans lequel le réseau de communication est un réseau par câble, un réseau téléphonique ou un réseau Internet, pendant qu'un premier modem (1) est en communication avec un deuxième modem (11) sur une ligne de communication (10, 17), le procédé de routage comprenant les étapes suivantes :
émettre une requête de réseau vers le premier modem (1) pour demander au premier modem (1) de lancer un processus de mise en garde de modem pour mettre en garde la communication sur la ligne de communication (10, 17) avec le deuxième modem (11), l'émission de la requête de réseau vers le premier modem (1) se faisant en réponse à la détection d'un problème avec le premier modem (1) ;
recevoir un accusé de réception du premier modem (1) indiquant que la communication entre le premier modem (1) et le deuxième modem (11) sur la ligne de communication (10, 17) a été mise en garde pendant une certaine durée ; et
remplacer le premier modem (1) par un troisième modem en réponse à la réception de l'accusé de réception, le deuxième modem (11) commençant à communiquer avec le troisième modem sur la ligne de communication (10, 17) après la fin de ladite durée,
dans lequel au moins l'un des premier, deuxième et troisième modems (1, 11) est un modem de Fournisseur de Service Internet.

2. Réseau de communication pour router une ligne de communication (10, 17) pendant qu'un premier modem est en communication avec un deuxième modem (11) sur la ligne de communication, le réseau de communication étant un réseau par câble, un réseau téléphonique ou un réseau Internet, et le réseau de communication comprenant :
un émetteur agencé pour émettre une requête de réseau vers le premier modem (1) pour demander au premier modem (1) de lancer un processus de mise en garde de modem pour mettre en garde la communication sur la ligne de communication (10, 17) avec le deuxième modem (11), l'émetteur émettant ladite requête de réseau vers le premier modem (1) en réponse à la détection d'un problème avec le premier modem (1) ;
un récepteur agencé pour recevoir un accusé de réception du premier modem (1) indiquant que la communication entre le premier modem (1) et le deuxième modem (11) sur la ligne de communication a été mise en garde pendant une certaine durée ; et
dans lequel la communication remplace le premier modem (1) par un troisième modem en réponse à l'accusé de réception, et dans lequel le deuxième modem (11) commence à communiquer avec le troisième modem sur la ligne de communication (10, 17) après la fin de ladite durée,
dans lequel au moins l'un des premier, deuxième et troisième modems (1, 11) est un modem de Fournisseur de Service Internet.
